# EUROPEAN PATENT SPECIFICATION

(11) **EP 2 087 270 B1**
(45) Date of publication and mention of the grant of the patent: **20.12.2017**
(21) Application number: 05708492.3
(22) Date of filing: 23.02.2005
(51) Int. Cl.: F16L 55/28

(54) **FLEXIBLE SHAFT ASSEMBLY**
BIEGSAME SCHAFTANORDNUNG
ASSEMBLAGE D'ARBRE SOUPLE

(30) Priority: 18.02.2005 HR 20050154
(43) Date of publication of application: 12.08.2009
(73) Proprietor: Inetec-Institute for Nuclear Technology D.O.O., 10000 Zagreb (HR)
(72) Inventor: GRACIN, Renato, HR-10000 Zagreb (HR)
(74) Representative: Köteles, Zoltan
(86) International application number: PCT/HR2005/000017
(87) International publication number: WO 2006/087592

(56) References cited:
- EP-A- 1 070 905
- DE-C1- 4 417 428
- DE-U1-202004 002 132
- US-A1- 2004 099 175

## Description

### Field of the Invention

This invention relates to flexible shaft assembly used as carrier of eddy current bobbin probe designed for inspection of curved tubes. Basically, this invention has been developed to be used in assembly of bobbin probe for inspection of steam generator tubes at WWER type of nuclear power plants (inner tubes diameter is 13 mm).

### Technical Problem

As eddy current probe (bobbin sensor and shaft) shall be pushed and than pulled through curved and wet tube by friction system with two pairs of driving wheels, it becomes a difficult problem.

### Prior Art

Normally, shaft used on bobbin eddy current probes for Ø13 mm inner tube diameter is nylon flexible hose (nylon 6 or 66) with diameter Ø8/Ø6 or Ø8/Ø5 mm. Inside the hose are mounted two coaxial cables - eddy current sensor consists of two bobbins, i.e. one cable per each bobbin. This system is successfully applied on straight tubes or less curved tubes that is not the case of steam generators tubes at WWER type of nuclear power plants. Particularly, friction forces between tube and the probe shaft become greater than power of probe pusher-puller system. (sensor assembly shall be also well designed to pass through bends). Such a shaft is e.g. described in document WO93/13413.

### Summary of Invention

Based on above mentioned limitations of inspection, new flexible shaft assembly has been developed with intention to pass smoothly through the tube bends.

Basic element of assembly is extension spring with dimension Ø7/Ø4 mm, length 16m. As such shaft could damage the tube passing through, nylon pearls are mounted on spring with intention to be in contact with the tube. During the probe movement in tube (pushing and pulling) and the spring elongation and return back, pearls could move axially along the spring. Therefore, after every 30 pearls one steel ring is mounted and crimped to the spring with duty to hold nylon pearls in one segment of the spring.

Inside the spring are mounted two coaxial cables with diameter of 01 mm, and one nylon coated strain wire (rope).

Flexibility of the whole assembly is maintained by its feature to elongate where it needs to bend. But, thin coaxial cables can not withstand such elongation as spring can. For example, during probe pulling out of the tube, it is rather likely for assembly of sensor to be stuck for moment in a bend. This situation results with temporary elongation of the shaft (inside elastic area of spring). Therefore, for length of assembly of 16 m, amount of coaxial cable and strain wire placed inside shall be larger than 16 m in order to cover elongation of the shaft. Furthermore, mentioned 16 m of the shaft are wounding on a drum while pulling out of tube. Due to fact that there is rather large difference between outside and inside diameter of the shaft (Ø9.8 and Ø4 i.e. r 4.9 and r 2 mm), cables and strain wire behave in a manner of moving reverse to the connector side of probe. This is the reason why (in manufacturing process) after assembly stretching, and inserting more cables and strain wire inside the shaft, on the connector side of shaft, cables and strain wire are held with glue.

Such shaft assembly provides excellent flexibility while maintaining desired mechanical features of remaining in elastic area (what is needed to suppress stretching of soldering joints between magnet wires from sensor and coaxial cables).

### Brief Description of Drawings

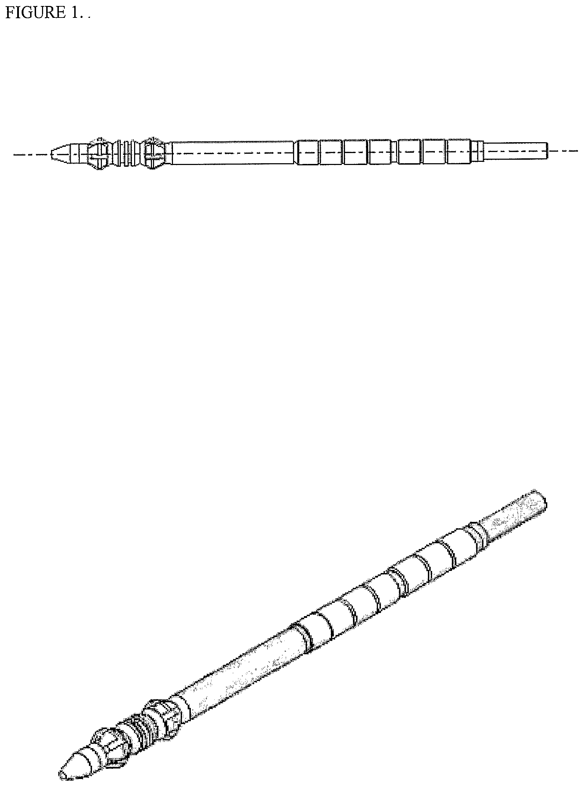

Figure 1. shows probe's assembly drawing including assembly of sensor (bobbins) attached with flexible hose to the shaft assembly.

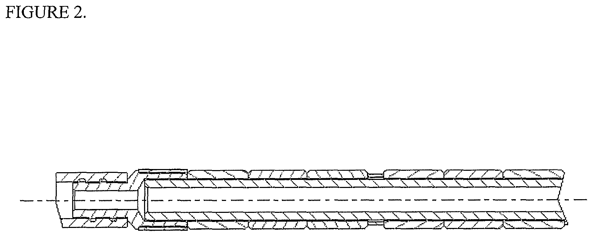

Figure 2. gives cross section detail of flexible shaft assembly and it is suitable to be published with summary of invention.

### Description of Preferred Embodiment

Basis element of the assembly is extension spring with dimension Ø7/Ø4 mm, length 16m. Spring is made of wire 02.1 mm (material is tempered steel ^.2330 or similar material) in a manner that wire before winding is passing through cylinders deforming wire into squared profile with dimension of 2.5 x 1.5 mm. On the spring are mounted nylon pearls (material nylon 6 or 66) with dimension Ø9.8/Ø7.1 x 10 mm. After every 30 pearls one stainless steel ring (Ø8.5/Ø7.5 x 2.5 mm) is mounted and crimped to the spring with duty to hold nylon pearls in one segment of the spring. Inside the spring are mounted two coaxial cables with diameter of Ø1 mm (AWG 36, stranded 50 ohm), and one nylon coated strain wire (outside diameter Ø0.94, bare diameter 00.81, material SS304 - hollow core 3x7 construction). For the length of 16 m of shaft, 16,90 m of cable and wire is mounted inside in order to cover possible elongation of shaft during work. On the end of process, connector end of shaft is glued to hold cables and wire from moving out of shaft, than connector can be installed.

### Application of Invention

As mentioned before, this flexible shaft assembly is developed to be used in eddy current bobbin probe for examination of tubing in steam generators installed in WWER nuclear power plants. But, assembly can be used also for the other examinations dealing with bended tubing wherever solution with nylon flexible pressure hose is not possible.

## Claims

1. Flexible shaft assembly for use with a bobbin probe for inspection of steam generator tubes at VVER type of nuclear power plants, where the inner diameter of tubes Is 13mm, the assembly, comprising an extension spring with dimension Φ7mm outside / Φ4mm inside, made of tempered steel wire of squared profile, **characterized in that** before winding said wire of the spring, having about 2.1 mm In diameter, Is deformed Into squared profile with dimension of about 2.5 x 1.5 mm, thus providing enhanced flexibility inside the elastic area of the spring and stable soldering joints; and nylon pearls with dimension of Φ9.8mm outside / Φ7.1mm inside x 10 mm In length, are mounted on said extension spring.

2. The flexible shaft assembly of claim 1, wherein stainless steel rings of about Φ8.5mm outside /Φ7.5mm Inside x 2.5 mm In length profile are mounted and crimped to the spring after every 30 to 50 pearls.

3. The flexible shaft assembly of claim 1, wherein cables and strain wires of the length 5-6% more than the length of the shaft are mounted inside the shaft and fixed on the connector side of the shaft.

## Patentansprüche

1. Flexible Schaftanordnung zur Verwendung mit einer Spulensonde für die Prüfung von Dampferzeugerrohren in Kernkraftwerken des Typs VVER, bei der der Innendurchmesser der Rohre 13 mm beträgt, wobei die Anordnung eine Verlängerungsfeder mit der Abmessung Φ 7 mm außen / Φ 4 mm innen, aus gehärtetem Stahldraht mit quadratischem Profil, umfasst,
**dadurch gekennzeichnet, dass** der Draht der Feder, der einen Durchmesser von etwa 2,1 mm aufweist, vor dem Aufwickeln zu einem quadratischen Querschnitt mit einer Abmessung von etwa 2,5 x 1,5 mm verformt wird, wodurch eine erhöhte Flexibilität im elastischen Bereich der Feder und stabile Lötverbindungen erreicht werden; und dass Nylonperlen mit einer Abmessung von Φ 9,8 mm außen / Φ 7,1 mm innen x 10 mm in der Länge auf der Verlängerungsfeder montiert werden.

2. Flexible Schaftanordnung nach Anspruch 1, wobei Edelstahlringe von etwa Φ 8,5 mm außen / Φ 7,5 mm innen x 2,5 mm im Längsprofil montiert und nach jeweils 30 bis 50 Perlen an die Feder gecrimpt werden.

3. Flexible Schaftanordnung nach Anspruch 1, bei der Kabel und Dehnungsdrähte mit einer Länge von 5-6% mehr als der Länge des Schafts innerhalb des Schafts montiert und auf der Verbindungsseite des Schafts befestigt sind.

## Revendications

1. Assemblage de tige flexible pour son utilisation avec une sonde à bobine pour l'inspection de tubes générateurs de vapeur à des centrales nucléaires de type VVER dans lesquelles le diamètre interne des tubes est de 13 mm, l'assemblage comprenant un ressort d'extension de dimensions Φ 7 mm extérieur / Φ 4 mm intérieur, réalisé à partir d'un fil d'acier trempé de profil carré, **caractérisé en ce que**, avant l'enroulement, ledit fil métallique du ressort, possédant un diamètre d'environ 2,1 mm, est soumis à une déformation pour obtenir un profilé carré possédant des dimensions d'environ 2,5 x 1,5 mm, pour ainsi fournir une flexibilité accrue au sein de la zone élastique du ressort et des points de soudage stables, et des perles en nylon de dimensions Φ 9,8 mm extérieur / Φ 7,1 mm intérieur x 10 mm de longueur, sont montées sur ledit ressort d'extension.

2. Assemblage de tige flexible selon la revendication 1, dans lequel des anneaux en acier inoxydable possédant un profil approximatif de Φ 8,5 mm extérieur / Φ 7,5 mm intérieur x 2,5 mm de longueur sont montés et sertis sur le ressort toutes les 30 à 50 perles.

3. Assemblage de tige flexible selon la revendication 1, dans lequel des câbles et des fils de contrainte dont la longueur est supérieure à raison de 5 à 6 % à la longueur de la tige sont montés à l'intérieur de la tige et sont fixés au côté raccordement de la tige.
